# EUROPEAN PATENT APPLICATION

(11) **EP 4 007 032 A1**
(43) Date of publication of application: **01.06.2022**
(21) Application number: 20843241.9
(22) Date of filing: 02.07.2020
(51) Int. Cl.: H01M 10/058, H01M 10/052, H01M 10/04

(54) **ELECTRODE ASSEMBLY AND LITHIUM SECONDARY BATTERY INCLUDING SAME**

(30) Priority: 23.07.2019 KR 20190088678
(71) Applicant: Routejade Inc., Nonsan-si, Chungcheongnam-do 33020 (KR)
(72) Inventor: JANG, Ji Hoon, Gyeryong-si Chungcheongnam-do 32825 (KR); JEONG, Chang Moon, Cheongju-si, Chungcheongbuk-do 28799 (KR); HONG, Ji Jun, Gwacheon-si, Gyeonggi-do 13813 (KR)
(74) Representative: dompatent von Kreisler Selting Werner - Partnerschaft von Patent- und Rechtsanwälten mbB
(86) International application number: PCT/KR2020/008670
(87) International publication number: WO 2021/015441

(57) **Abstract**

An electrode assembly according to an embodiment of the present invention includes: a pocketing positive electrode including a positive electrode current collector, positive electrode active materials applied onto two opposite surfaces of the positive electrode current collector, an insulating member configured to surround an edge of the positive electrode current collector except for a positive electrode uncoated portion protruding the edge of the positive electrode current collector, and separators positioned on upper and lower surfaces of the insulating member so as to cover the positive electrode active materials and the insulating member; a negative electrode including a negative electrode current collector and a negative electrode active material applied onto at least one of two opposite surfaces of the negative electrode current collector, the negative electrode being stacked alternately with the pocketing positive electrode; and a binding member attached to the pocketing positive electrode and the negative electrode to maintain a stacked state or an aligned state of the pocketing positive electrode and the negative electrode alternately stacked, in which closing portions are formed at edges of the pocketing positive electrode and the negative electrode and each have a length which is not shorter than a width of the binding member, and the binding member is positioned on the closing portions.

## Description

### [Technical Field]

The present invention relates to an electrode assembly and a lithium secondary battery including the same, and more particularly, to an electrode assembly and a lithium secondary battery including the same, which are capable of preventing a breakdown of insulation resistance due to interference between a sealing portion of a pouch and a binding tape attached to an electrode assembly to maintain a state in which a negative electrode and a pocketing positive electrode are alternately stacked.

### [Background Art]

Recently, as the development in cutting-edge electronic industries enables reductions in numbers and weights of electronic devices, the use of portable electronic devices and mobile devices having various shapes increases. There is an increasing need for batteries having high energy density as power sources for portable electronic devices, mobile devices, and the like, and thus studies are being actively conducted on lithium secondary batteries.

In particular, the rapid miniaturization and thinning of electronic devices and mobile devices rapidly increase demands for thin lithium secondary batteries having thin thicknesses. However, the structures of and/or the methods of manufacturing cylindrical or angular lithium secondary batteries in the related art are not excellent in energy density for each volume that affects the thinning of the battery. Therefore, it is difficult to obtain a sufficient operating time in a case in which a typical thin battery having a thickness of 5 mm or less is applied to a mobile device or a high-performance portable electronic device such as a camcorder or a notebook computer.

Specifically, the angular lithium secondary battery does not have good battery efficiency compared to the volume because of an electrode body structure having a jelly roll shape. Because of a technical limitation in reducing a thickness of a wall body of a metal packaging material manufactured by low-temperature stretching, the thickness of the battery is reduced, which degrades energy density.

In contrast, a lithium polymeric battery assembled by sealing, with an aluminum laminate packaging material, an electrode assembly made by stacking negative electrodes, separators, and positive electrodes alternately several times may reduce a waste of space caused by the jelly roll. However, a large amount of polymeric binders needs to be used or a bonding layer needs to be applied onto an electrode-electrolyte interface to increase adhesion between the electrodes, which causes deterioration in energy density and battery performance.

Meanwhile, to maintain the stacked state of the negative electrodes, the separators, and the positive electrodes or fix the negative electrodes, the separators, and the positive electrodes, a tape needs to be attached to a thickness direction portion of the electrode assembly having the layered structure. In this case, if the electrode has a circular shape or a curved edge having an elliptical shape or the like, it is difficult to attach the tape by bringing the tape into contact with the curved edge of the electrode assembly. In particular, in the case of a pouch type battery configured such that an electrode assembly having a circular or curved edge is accommodated in a pouch, interference may occur between the tape and the pouch.

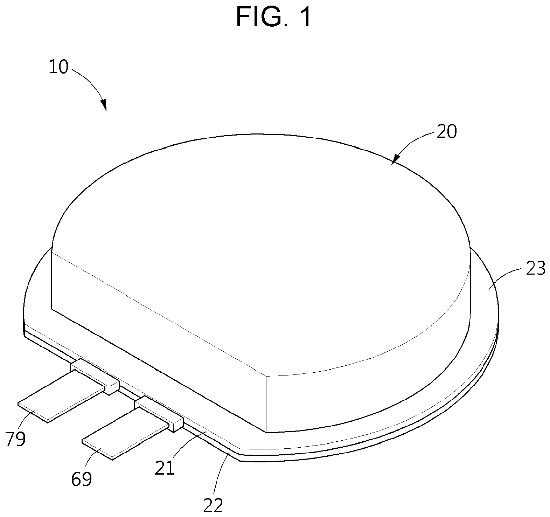

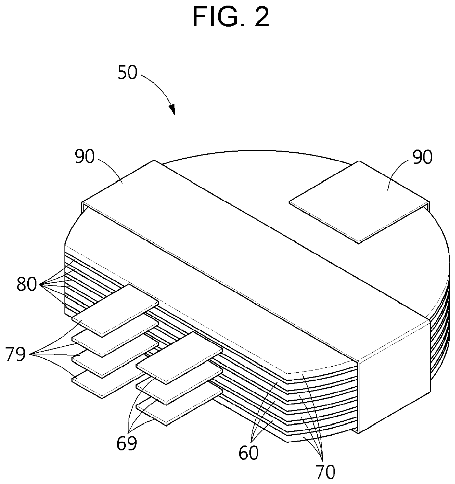

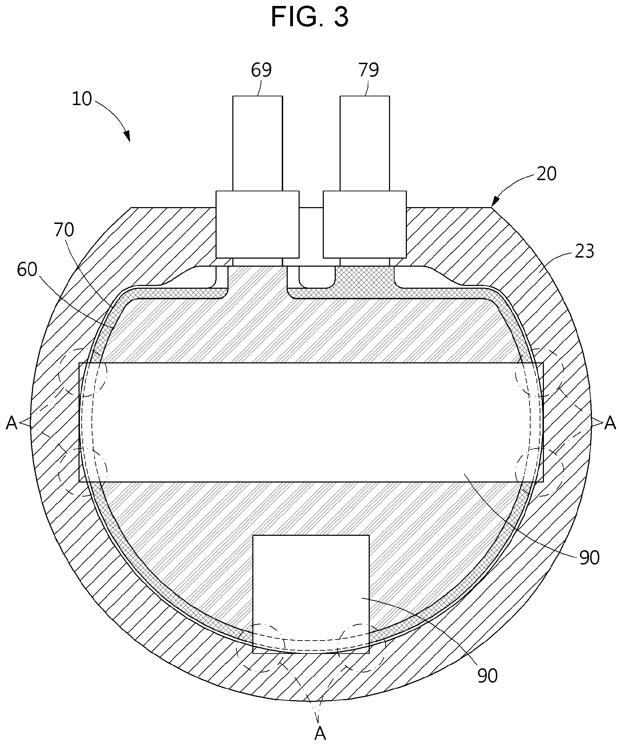

FIGS. 1 to 3 illustrate a pouch type lithium secondary battery 10 in the related art. FIG. 1 is a perspective view of the pouch type lithium secondary battery 10 in the related art, FIG. 2 is a perspective view of an electrode assembly 50 accommodated in the pouch type lithium secondary battery illustrated in FIG. 1, and FIG. 3 is a top plan view for explaining an interior of the pouch type lithium secondary battery illustrated in FIG. 1.

A pouch 20, which defines an exterior material (casing) of the pouch type lithium secondary battery 10 includes first and second pouches 21 and 22, and edges of the first and second pouches 21 and 22 may be joined to each other, thereby defining a sealing portion 23. The electrode assembly 50, an electrolyte, and the like are sealed and accommodated in an internal space of the first and second pouches 21 and 22. However, a positive electrode uncoated portion 69 and a negative electrode uncoated portion 79 of the electrode assembly 50 are exposed to the outside of the pouch 20.

The electrode assembly 50 accommodated in the pouch 20 may be formed by stacking positive electrodes 60, separators 80, and negative electrodes 70 repeatedly and alternately. The stacked state may be broken at the time of accommodating the electrode assembly 50 in the pouch 20. To prevent this problem, a tape 90 may be attached to an edge or rim of the electrode assembly 50. The tape 90 may be attached to a position on the electrode assembly 50 which faces the uncoated portions 69 and 79 or attached to a position on the electrode assembly 50 which is spaced apart from the uncoated portions 69 and 79 by 90 degrees.

For reference, FIG. 2 illustrates that the electrode assembly 50 is thick. However, the electrode assembly 50 may be actually very thin and have a thickness of 0.2 mm or less.

However, the edge of the electrode assembly 50 is circular or curved, whereas the tape 90 is not curved. For this reason, the tape 90 has portions which are not attached to the electrode assembly 50, and the portions of the tape 90, which are not attached to the electrode assembly 50, are attached to one another. In this case, the portions of the tape 90, which are not attached to the electrode assembly 50 but attached to one another, protrude from an edge of the electrode assembly 50. In a case in which the electrode assembly 50 fixed by the tape 90 in this state is inserted into the pouch 20, and then the sealing portion 23 is formed at an edge of the pouch 20, the portions of the tape 90, which are attached to one another and protrude from the edge of the electrode assembly 50, may interfere with the sealing portion 23. In other words, the sealing portion 23 may be formed in a state in which the protruding portion of the tape 90 is positioned between the edges of the first and second pouches 21 and 22 at the time of joining the edges of the first and second pouches 21 and 22 after the electrode assembly 50 is accommodated in the pouch 20.

Referring to FIG. 3, the sealing portion 23 is formed in a state in which the portions (see A) of the tape 90, which are not attached to the electrode assembly 50 but attached to one another, overlap the sealing portion 23. In this state, the portion of the tape 90 inserted into the sealing portion 23 may cause a problem of the breakdown of insulation resistance of the sealing portion 23. The breakdown of insulation resistance causes swelling of the battery, which may degrade safety of the battery.

The present applicant proposes the present invention to solve the above-mentioned problems.

### [Disclosure]

### [Technical Problem]

The present invention has been made in an effort to solve the above-mentioned problems and provides an electrode assembly and a lithium secondary battery including the same, in which a positive electrode current collector and a negative electrode current collector have different shapes at the time of manufacturing an electrode assembly for a pouch type lithium secondary battery in which an edge of a negative electrode and an edge of a pocketing positive electrode each are circular or curved, thereby preventing a breakdown of insulation resistance of a pouch and inhibiting a loss of energy density.

The present invention provides an electrode assembly and a lithium secondary battery including the same, in which a closing portion capable of being in surface contact with a binding member such as a tape may be formed at an edge of a stacked electrode assembly, thereby preventing a breakdown of insulation resistance of a pouch.

The present invention provides an electrode assembly and a lithium secondary battery including the same, which are capable of maintaining a state in which a positive electrode(a cathode) and a negative electrode(an anode) of an electrode assembly are aligned even though a closing portion is formed at an edge of a stacked electrode assembly.

### [Technical Solution]

To achieve the above-mentioned objects, an electrode assembly according to an embodiment of the present invention includes: a pocketing positive electrode including a positive electrode current collector, positive electrode active materials applied onto two opposite surfaces of the positive electrode current collector, an insulating member configured to surround an edge of the positive electrode current collector except for a positive electrode uncoated portion protruding the edge of the positive electrode current collector, and separators positioned on upper and lower surfaces of the insulating member so as to cover the positive electrode active materials and the insulating member; a negative electrode including a negative electrode current collector and a negative electrode active material applied onto at least one of two opposite surfaces of the negative electrode current collector, the negative electrode being stacked alternately with the pocketing positive electrode; and a binding member attached to the pocketing positive electrode and the negative electrode to maintain a stacked state or an aligned state of the pocketing positive electrode and the negative electrode alternately stacked, in which closing portions are formed at edges of the pocketing positive electrode and the negative electrode and each have a length which is not shorter than a width of the binding member, and the binding member is positioned on the closing portions.

The edges of the pocketing positive electrode and the negative electrode, except for the closing portion, may be curved, and the closing portion may be not curved.

The closing portion may include a linear portion formed straight or linearly, and a length of the linear portion may be equal to or longer than the width of the binding member.

In a state in which the pocketing positive electrode and the negative electrode are alternately stacked, the closing portion formed at the edge of the pocketing positive electrode and the closing portion formed at the edge of the negative electrode may be formed at positions that coincide with or overlap each other.

The closing portion formed at the edge of the negative electrode may be formed on the negative electrode current collector and the negative electrode active material.

The closing portion formed at the edge of the pocketing positive electrode may be formed on the separator and the insulating member.

The closing portion formed at the edge of the pocketing positive electrode may be formed to be in line contact with the edge of the positive electrode current collector.

In a state in which the pocketing positive electrode and the negative electrode are alternately stacked, the edge of the positive electrode current collector may be positioned inward from the edge of the negative electrode current collector.

The closing portion formed at the edge of the pocketing positive electrode may be formed on the positive electrode current collector, the positive electrode active material, the separator, and the insulating member.

In a state in which the pocketing positive electrode and the negative electrode are alternately stacked, at least a part of the edge of the positive electrode current collector may be positioned inward from the edge of the negative electrode current collector.

Meanwhile, another embodiment of the present invention provides a lithium secondary battery including: the electrode assembly; and a casing configured to seal and accommodate an electrolyte together with the electrode assembly.

The casing may include a first pouch and a second pouch, a sealing portion may be formed by joining edges of the first and second pouches, and an insulation maintaining portion may be formed between the closing portion, the binding member, and an inner edge of the sealing portion.

The insulation maintaining portion may be a portion surrounded by the closing portion, the binding member, and the inner edge of the sealing portion, and the binding member may be positioned in the insulation maintaining portion but not in contact with the sealing portion.

### [Advantageous Effects]

According to the electrode assembly and the lithium secondary battery including the same according to the present invention, the positive electrode current collector and the negative electrode current collector have different shapes at the time of manufacturing the electrode assembly for a pouch type lithium secondary battery in which the edge of the negative electrode and the edge of the pocketing positive electrode are circular or curved. Therefore, it is possible to prevent a breakdown of insulation resistance of the pouch and inhibit a loss of energy density.

According to the electrode assembly and the lithium secondary battery including the same according to the present invention, the closing portion capable of being in surface contact with the binding member such as a tape is formed at the edge of the stacked electrode assembly. Therefore, it is possible to prevent a breakdown of insulation resistance of the pouch and securely attach the binding member to the electrode assembly.

According to the electrode assembly and the lithium secondary battery including the same according to the present invention, it is possible to maintain the state in which the pocketing positive electrode and the negative electrode are aligned even though the closing portion is formed at the edge of the stacked electrode assembly.

According to the electrode assembly and the lithium secondary battery including the same according to the present invention, the binding member is attached to the accurate position on the electrode assembly. Therefore, it is possible to prevent a defect due to an attachment position error of the binding member.

### [Description of Drawings]

FIG. 1 is a perspective view of a pouch type lithium secondary battery in the related art.
FIG. 2 is a perspective view of an electrode assembly accommodated in the lithium secondary battery illustrated in FIG. 1.
FIG. 3 is a top plan view for explaining an interior of the lithium secondary battery illustrated in FIG. 1.
FIG. 4 is a perspective view of a lithium secondary battery according to an embodiment of the present invention.
FIG. 5 is a longitudinal sectional view of an electrode assembly of the lithium secondary battery illustrated in FIG. 4.
FIG. 6 is a view for explaining a pocketing positive electrode and a negative electrode that constitute the electrode assembly of the lithium secondary battery illustrated in FIG. 4.
FIG. 7 is a top plan view for explaining an interior of the lithium secondary battery illustrated in FIG. 4.
FIG. 8 is a view illustrating a sealing portion and an edge of the electrode assembly of the lithium secondary battery illustrated in FIG. 7.
FIG. 9 is a top plan view for explaining an interior of a lithium secondary battery according to an embodiment of the present invention.
FIG. 10 is an enlarged view of part "D1" in FIG. 9.

### [Best Mode]

Hereinafter, embodiments according to the present invention will be described in detail with reference to the accompanying drawings. However, the present invention is not restricted or limited by the embodiments. Like reference numerals indicated in the respective drawings refer to like members.

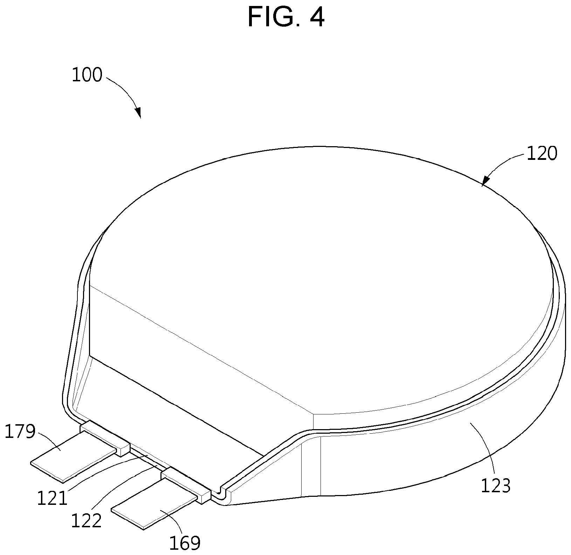

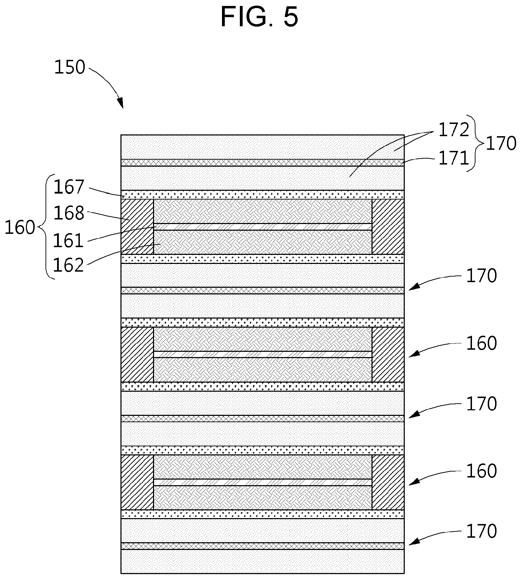

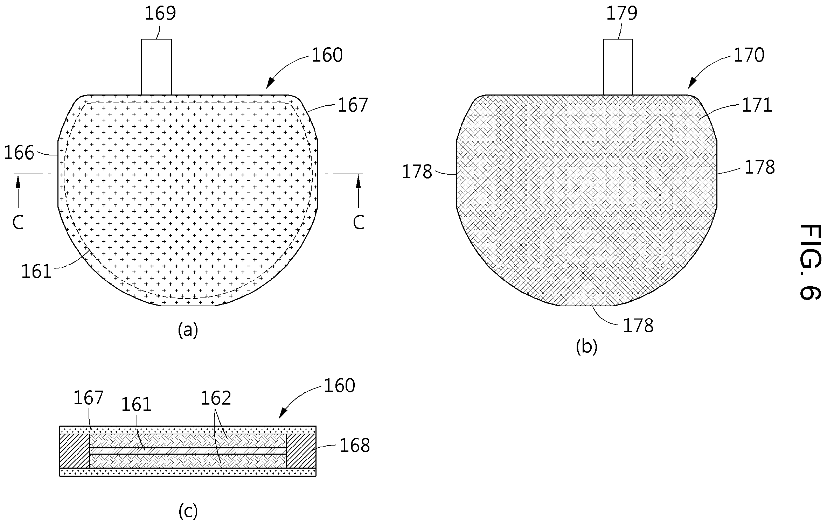

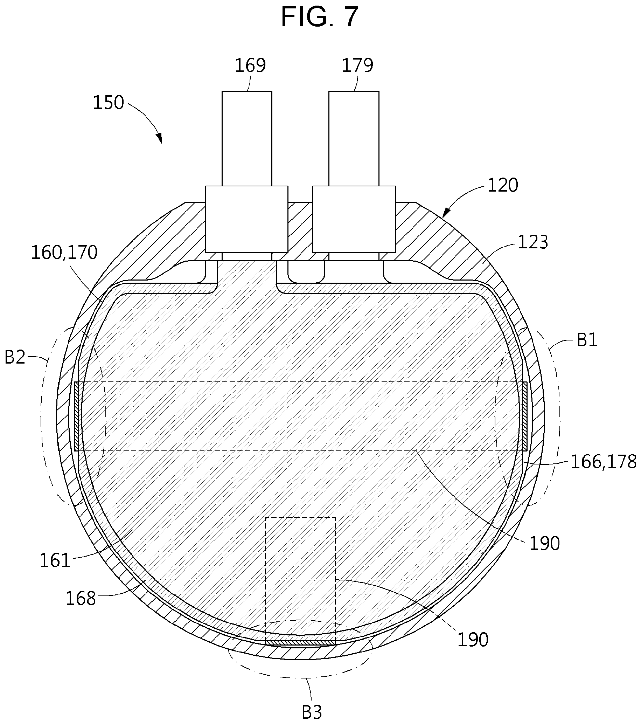

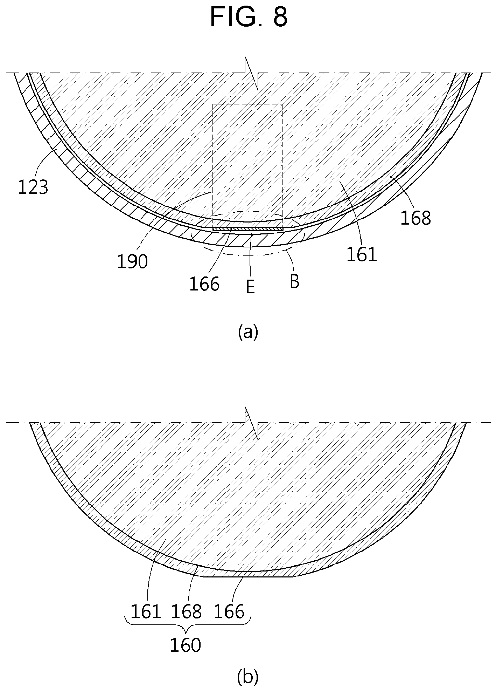

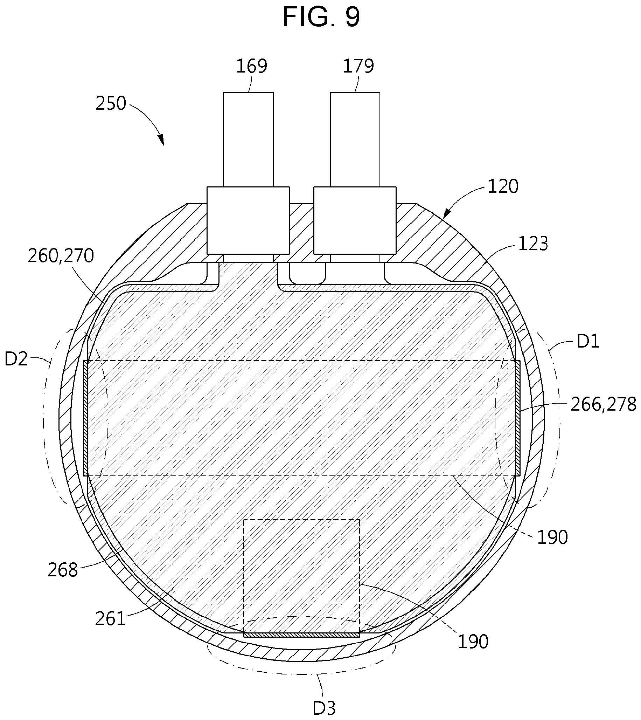

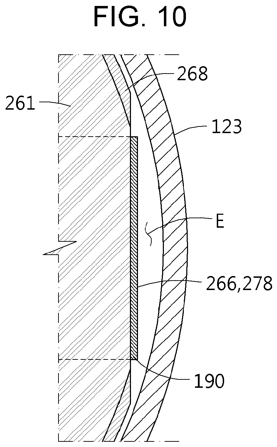

FIG. 4 is a perspective view of a lithium secondary battery according to an embodiment of the present invention, FIG. 5 is a longitudinal sectional view of an electrode assembly of the lithium secondary battery illustrated in FIG. 4, FIG. 6 is a view for explaining a pocketing positive electrode and a negative electrode that constitute the electrode assembly of the lithium secondary battery illustrated in FIG. 4, FIG. 7 is a top plan view for explaining an interior of the lithium secondary battery illustrated in FIG. 4, FIG. 8 is a view illustrating a sealing portion and an edge of the electrode assembly of the lithium secondary battery illustrated in FIG. 7, FIG. 9 is a top plan view for explaining an interior of a lithium secondary battery according to an embodiment of the present invention, and FIG. 10 is an enlarged view of part "D1" in FIG. 9.

Electrode assemblies 150 and 250 according to the present invention, which will be described below, are electrode assemblies used for lithium secondary batteries 100. Because a separator, an insulating member, a positive electrode current collector(a cathode current collector), a positive electrode active material, a negative electrode current collector(an anode current collector), a negative electrode active material, an electrolyte, and the like, which constitute the electrode assembly, are identical to those used for the electrode assembly and the lithium secondary battery disclosed in Korean Patent No. 10-1168650 or 10-1168651, detailed descriptions thereof will be omitted.

The electrode assemblies 150 and 250 according to the present invention, which will be described below, are each made by stacking a plurality of electrode bodies, and the electrode assemblies 150 and 250 are each accommodated in a pouch type exterior material (casing). That is, the electrode assemblies 150 and 250 according to the present invention may be applied to a pouch type lithium secondary battery. However, the electrode assemblies 150 and 250 according to the present invention are not applied only to the pouch type lithium secondary battery but may be applied to a case in which the electrode assembly needs to be bound regardless of a shape of the battery. Hereinafter, to help understanding the present invention, an example will be described in which the electrode assembly is applied to the pouch type lithium secondary battery.

Hereinafter, the electrode assemblies 150 and 250 and the lithium secondary battery 100 including the same according to the present invention will be described in detail with reference to the drawings.

Referring to FIG. 4, the lithium secondary battery 100 according to the embodiment of the present invention may include the electrode assembly 150 or 250 accommodated in the casing 120. A positive electrode uncoated portion 169 and a negative electrode uncoated portion 179, which extends from the electrode assembly 150 or 250, may be exposed to the outside of a casing 120. The casing 120 includes a first casing 121 and a second casing 122, and the electrode assembly 150 or 250 may be accommodated in the casing 120. To seal and accommodate the electrode assembly 150 or 250, together with an electrolyte (not illustrated), in the casing 120, a sealing portion 123 needs to be formed by bonding edges of the first and second casings 121 and 122. In this case, the sealing portion 123 may be provided in a direction toward a surface of the lithium secondary battery 100, but the sealing portion 123 may be folded in a thickness direction of the lithium secondary battery 100. As described below, the casing 120 may be provided as a pouch. That is, the sealing portion 123 may be formed by bonding the edges of the first and second pouches 121 and 122, and the electrode assembly 150 or 250 may be sealed and accommodated in the first and second pouches 121 and 122.

FIG. 5 illustrates the electrode assembly 150 of the lithium secondary battery 100 according to the embodiment of the present invention. The electrode assembly 150 may be formed by alternately and repeatedly stacking pocketing positive electrodes 160 and negative electrodes 170. Referring to FIG. 5, two-sided negative electrodes 170, i.e., negative electrodes 170 each made by applying a negative electrode active material 172 onto two opposite surfaces of a negative electrode current collector 171 are positioned at lowermost and uppermost sides of the electrode assembly 150. In some instances, one-sided negative electrodes (not illustrated) may be positioned at the lowermost and uppermost sides of the electrode assembly 150. In this case, the one-sided negative electrode refers to a negative electrode made by applying the negative electrode active material 172 only onto any one surface of the negative electrode current collector 171. In this case, the negative electrode active material of the one-sided negative electrode may be stacked toward the pocketing positive electrode 160. Therefore, the negative electrode 170 may include the negative electrode current collector 171 and the negative electrode active material 172 applied onto at least one of the two opposite surfaces of the negative electrode current collector 171.

Furthermore, one-sided positive electrodes each made by applying a positive electrode active material 162 only onto one surface of a positive electrode current collector 161 may be positioned at the uppermost and lowermost sides of the electrode assembly 150.

Referring to FIGS. 5 and 6, the negative electrode 170 may include the negative electrode current collector 171 and the negative electrode active material 172 applied onto at least one surface of the negative electrode current collector 171.

In contrast, the positive electrode 160 is positioned in a space defined by an insulating member 168 and separators 167. The positive electrode having this shape may be called the pocketing positive electrode 160 or an encapsulation positive electrode.

The pocketing positive electrode 160, which constitutes the stack of the electrode assembly 150, may include: the positive electrode current collector 161; the positive electrode active materials 162 applied onto the two opposite surfaces of the positive electrode current collector 161; the insulating member 168 configured to surround an edge of the positive electrode current collector 161 except for the positive electrode uncoated portion 169 protruding from the edge of the positive electrode current collector 161; and separators 167 positioned on upper and lower surfaces of the insulating member 168 so as to cover the positive electrode active materials 162 and the insulating member 168.

The insulating member 168 may be provided in the form of an insulating polymeric film having an adhesive substance so that the insulating member 168 is bonded to the separator 167 positioned on the upper and lower surfaces of the insulating member 168. For example, the insulating member 168 may be joined to the upper and lower separators 167 by being heated and pressed.

The positive electrode active material 162 is not applied onto the positive electrode uncoated portion 169 extending from the edge of the positive electrode current collector 161. The positive electrode uncoated portion 169 is provided outside a pocketing space without being positioned in the pocketing space surrounded by the insulating member 168 and the separators 167.

Likewise, the negative electrode active material 172 is not applied onto the negative electrode uncoated portion 179 extending from the edge of the negative electrode current collector 171.

In this case, the pocketing positive electrode 160 may be formed to correspond or be identical in size to the negative electrode 170. The pocketing positive electrode 160 and the negative electrode 170 may correspond or be identical in size or shape to each other because the pocketing positive electrode 160 and the negative electrode 170 constitute the electrode assembly 150. Therefore, the edge of the pocketing positive electrode 160, i.e., the edge of the insulating member 168 may be coincident with the edge of the negative electrode 170. Because the insulating member 168 has a predetermined width, the positive electrode current collector 161 needs to be smaller than the negative electrode current collector 171.

The electrode assembly 150 is formed by stacking the pocketing positive electrodes 160 and the negative electrodes 170 alternately so that the edge of the pocketing positive electrode 160 and the edge of the negative electrode 170 are coincident with each other, and the edge of the positive electrode current collector 161 is positioned inward from the edge of the negative electrode current collector 171. It can be said that the accurate alignment is made when the edge of the positive electrode current collector 161 is positioned inward from the edge of the negative electrode current collector 171 when the electrode assembly 150 is stacked as described above.

The electrode assembly 150 according to the embodiment of the present invention may include a binding member 190 configured to fix the state in which the pocketing positive electrodes 160 and the negative electrodes 170 are alternately stacked.

If the stacked state is broken at the time of accommodating the electrode assembly 150, which is made by stacking the pocketing positive electrodes 160 and the negative electrodes 170 alternately, in the casing or pouch 120, there may be the pocketing positive electrode 160 or the negative electrode 170 which is not aligned at an accurate position, which may cause an internal short circuit or the like. To prevent the problem, it is necessary to securely maintain the stacked state by attaching the binding member to the stacked electrode assembly 150 at the accurate alignment position.

In this case, the binding member 190 may be, but not necessarily limited to, a tape. A bonding member may be used as the binding member as long as the bonding member has a thickness and does not reduce energy density while being attached to the pocketing positive electrode and the negative electrode that constitute the electrode assembly 150.

Meanwhile, closing portions 166 and 178 may be respectively formed at the edges of the pocketing positive electrode 160 and the negative electrode 170 that constitute the electrode assembly 150 according to the embodiment of the present invention. The closing portions 166 and 178 may be provided at the same position when viewed from the lateral side of the electrode assembly 150 in the stacked state, and the binding member 190 may be positioned on or attached to the closing portions 166 and 178.

That is, in the state in which the pocketing positive electrodes 160 and the negative electrodes 170 are alternately stacked, the closing portion 166 formed at the edge of the pocketing positive electrode 160 and the closing portion 178 formed at the edge of the negative electrode 170 may be formed at the positions that coincide with or overlap each other.

Because the binding member 190 are in contact with the overall area of the closing portions 166 and 178 formed on the pocketing positive electrode 160 and the negative electrode 17 which are stacked, it is possible to increase the bonding force between the binding member 190 and the closing portions 166 and 178 or securely maintain the bonded state.

In this case, the closing portions 166 and 178 may each have a length that is not shorter than a width of the binding member 190. That is, the closing portions 166 and 178 may each have a length longer than the width of the binding member 190 or at least have a length equal to the width of the binding member 190. If the length of each of the closing portions 166 and 178 is shorter than the width of the binding member 190, a part of the binding member 190 may deviate from two opposite ends of each of the closing portions 166 and 178 and finally interfere with the sealing portion 123 to be described below. Therefore, the closing portions 166 and 178 may each be formed to have a length to the extent that the binding member 190 does not deviate from the two opposite ends of each of the closing portions 166 and 178, thereby preventing the binding member 190 from interfering with the sealing portion 123.

Meanwhile, the closing portions 166 and 178 may be formed when the edges of the pocketing positive electrode 160 and the negative electrode 170, to which the binding member 190 needs to be attached, are curved instead of being straight. That is, the edges of the pocketing positive electrode 160 and the negative electrode 170, except for the closing portions 166 and 178, may be curved, and the closing portions 166 and 178 are not curved.

The closing portions 166 and 178 may be shaped to prevent the binding member 190, which is attached to or positioned on the closing portions 166 and 178, from being inserted into the sealing portion 123 of the pouch 120 or interfering with the sealing portion 123.

To this end, the closing portions 166 and 178 may be formed straight or linearly. In this case, the entire closing portions 166 and 178 need not be formed straight or linearly. The closing portions 166 and 178 may each have a linear portion (not illustrated) longer than the width of the binding member 190, and curved portions (not illustrated) connected to two opposite ends of the linear portion. However, the portion of each of the closing portions 166 and 178, on which the binding member 190 is positioned, needs to be formed straight or linearly. As described above, the closing portions 166 and 178 may each have the linear portion formed straight or linearly, and a length of the linear portion may be equal to or longer than the width of the binding member 190.

FIG. 7 is a top plan view illustrating a state in which the pocketing positive electrode 160 is positioned at the uppermost side. FIG. 7 is a view illustrating a state in which the upper separator 167 is removed among the separators 167 that constitute the pocketing positive electrode 160. The negative electrode 170 may be positioned below the pocketing positive electrode 160. Referring to FIG. 7, it can be seen that each of the closing portions 166 and 178 on which the binding member 190 is positioned is formed straight at the edges of the pocketing positive electrode 160 and the negative electrode 170 and has a length longer than the width of the binding member 190.

As illustrated in FIG. 7, the binding member 190 may be attached to the edge of the electrode assembly 150 opposite to the uncoated portions 169 and 179 to bind the electrode assembly 150. Alternatively, the binding member 190 may be attached to the electrode assembly 150 at a position spaced apart from the uncoated portions 169 and 179 at 90 degrees to bind the electrode assembly 150. FIG. 7 illustrates that the binding member 190 is attached only to a part of the upper surface and a part of the lower surface of the electrode assembly 150 opposite to the uncoated portions 169 and 179, whereas the binding member 190 is bound to completely surround the electrode assembly 150 at the position spaced apart from the uncoated portions 169 and 179 at 90 degrees. However, in some instances, the binding member may be attached only to a part of the upper surface and a part of the lower surface of the electrode assembly 150 even at the position spaced apart from the uncoated portions 169 and 179 at 90 degrees. In addition, the position at which the binding member 190 is attached and the number of binding members 190 may be appropriately selected depending on the electrode assembly 150 or the battery 100.

As illustrated in FIGS. 6B and 7, the closing portion 178 formed at the edge of the negative electrode 170 may be formed on the negative electrode current collector 171 and the negative electrode active material 172. This is because the negative electrode current collector 171 and the negative electrode active material 172 are formed to the edge of the negative electrode 170.

In contrast, referring to FIGS. 6A and 7, the closing portion 166 formed at the edge of the pocketing positive electrode 160 may be formed on the separator 167 and the insulating member 168. Unlike the negative electrode 170, the closing portion 166 may not be formed on the positive electrode current collector 161 and the positive electrode active material 162. Since the insulating member 168 and the separator 167 are positioned at the edge of the pocketing positive electrode 160, the closing portion 166 may be formed as the insulating member 168 and the separator 167 are cut when the closing portion 166 is formed at the same position as the closing portion 178 of the negative electrode 170. Therefore, the shapes of the edges of the positive electrode current collector 161 and the positive electrode active material 162 of the pocketing positive electrode 160 are not changed even though the closing portion 166 is formed.

Referring to FIGS. 6A and 7, it can be seen that a width of the portion of the insulating member 168 on which the closing portion 166 is formed may be smaller than a width of the other portions.

In addition, the insulating member 168 may not be present on the portion on which the closing portion 168 is formed. Even though the closing portion 166 is formed, the shapes of the edges of the positive electrode current collector 161 and the positive electrode active material 162 may be maintained as it is in the configuration in which the insulating member 168 is not present. If the edges of the positive electrode current collector 161 and the positive electrode active material 162 are cut to form the closing portion 166, an area of the positive electrode is reduced to that extent, which reduces energy density. Therefore, the shapes of the edges of the positive electrode current collector 161 and the positive electrode active material 162 need not be treated if possible.

When the closing portion 166 is formed by completely removing the insulating member 168 in the state in which the edges of the positive electrode current collector 161 and the positive electrode active material 162 are kept curved as described above, the closing portion 166 or the binding member 190 may be in line contact with the edge of the positive electrode current collector 161.

Even though the closing portions 166 and 178 are formed at the edges of the pocketing positive electrode 160 and the negative electrode 170, the edge of the positive electrode current collector 161 may be positioned inward from the edge of the negative electrode current collector 171 in the state in which the pocketing positive electrodes 160 and the negative electrodes 170 are alternately stacked.

Referring to FIG. 7, the edge of the positive electrode current collector 161 positioned inside the insulating member 168 is curved, whereas the negative electrode current collector 171 has the edge coincident with the edge of the insulating member 168. Therefore, it can be seen that even in the state in which the closing portions 166 and 178 are formed, the edge of the positive electrode current collector 161 is positioned inward from the edge of the negative electrode current collector 171, and thus the aligned state of the electrode assembly 150 is maintained well.

FIGS. 8A and 8B illustrate the sealing portion 123 and the edge of the pocketing positive electrode 160 at which the closing portion 166 is formed. Referring to FIG. 8A, it can be seen that a space E is formed between the closing portion 166 and an inner side of the sealing portion 123, and the binding member 190 is positioned in the space E. Because the binding member 190 attached to a thickness direction side of the electrode assembly 150 is positioned in the space E, the binding member 190 does not interfere with the sealing portion 123, which makes it possible to prevent a breakdown of insulation resistance of the sealing portion 123. Therefore, the space formed between the closing portion 166 and the inner side of the sealing portion 123 may be referred to as an insulation maintaining portion E for maintaining insulation resistance.

For reference, FIG. 8B illustrates the closing portion 166 formed by cutting only a part of the edge of the insulating member 168 in a width direction thereof. A length of the closing portion 166 increases as the edge of the insulating member 168 is cut to a large degree. This also applies to the closing portion 178 formed at the edge of the negative electrode 170.

If the pocketing positive electrode and the negative electrode each have a large size and the binding member has a large width, the length of the closing portion needs to be further increased. However, in this case, the insulating member needs to be completely cut and removed, and even a part of the edge of the positive electrode current collector may also be cut, thereby forming the closing portion.

FIGS. 9 and 10 illustrate the electrode assembly 250 and the lithium secondary battery 100 including the same according to another embodiment of the present invention.

The electrode assembly 250 according to another embodiment of the present invention illustrated in FIG. 9 differs from the electrode assembly 150 illustrated in FIG. 7 in terms of portions on which closing portions 266 and 278. Specifically, the electrode assembly 250 differs from the electrode assembly 150 in terms of the portion of a pocketing positive electrode 260 on which the closing portion 266 is formed. As illustrated in FIG. 7, the closing portion 166 formed on the pocketing positive electrode 160 is formed only on the insulating member 168 but not formed on the positive electrode current collector 161. That is, the edge of the positive electrode current collector 161 adjacent to the closing portion 166 is curved. In contrast, as illustrated in FIG. 9, the closing portion 266 formed on the pocketing positive electrode 260 may be formed by cutting a part of the edge of the positive electrode current collector 261 as well as the insulating member 268. That is, the closing portion 266 formed at the edge of the pocketing positive electrode 260 may be formed on a positive electrode current collector 261, a positive electrode active material, a separator, and an insulating member 268.

For reference, like FIG. 7, FIG. 9 is a top plan view illustrating a state in which the pocketing positive electrode 260 is positioned at the uppermost side. FIG. 9 is a view illustrating a state in which the upper separator is removed among the separators that constitute the pocketing positive electrode 260. A negative electrode 270 may be positioned below the pocketing positive electrode 260.

Referring to FIG. 9, the insulating member 268 is completely removed from the closing portion 266, and the positive electrode current collector 261 is also removed straight. Since a part of the positive electrode current collector 261 is removed as described above, energy density of the battery may be removed. However, in some instances, there may be a case in which the closing portions 266 and 278 shaped as illustrated in FIG. 9 need to be applied while accepting a loss of energy density.

Referring to FIG. 9, in the state in which the pocketing positive electrodes 260 and the negative electrodes 270 are alternately stacked, at least a part of the edge of the positive electrode current collector 261 may be positioned inward from the edge of the negative electrode current collector. That is, the edge of the positive electrode current collector 261 and the edge of the negative electrode current collector are coincident with each other at the portions on which the closing portions 266 and 278 are formed. However, at the other portions, the edge of the positive electrode current collector 261 is positioned inward from the edge of the negative electrode current collector.

Meanwhile, the embodiment of the present invention may provide the lithium secondary battery 100 including the electrode assembly 150 or 250; and the casing 120 configured to seal and accommodate an electrolyte together with the electrode assembly 150 or 250.

In this case, the casing 120 includes the first pouch 121 and the second pouch 122, and the sealing portion 123 may be formed by joining the edges of the first and second pouches 121 and 122.

The insulation maintaining portion E may be formed between the closing portion 166,178, 266, or 278 formed at the edges of the pocketing positive electrode 160 or 260 and the negative electrode 170 or 270, the binding member 190, and the inner edge of the sealing portion 123. The insulation maintaining portion E may be a portion surrounded by the closing portion 166, 170, 266, or 278, the binding member 190, and the inner edge of the sealing portion 123. The binding member 190 may be positioned in the insulation maintaining portion E but not in contact with the sealing portion 123.

As illustrated in FIG. 10, since the binding member 190 is positioned in the insulation maintaining portion E, the binding member 190 does not interfere with the sealing portion 123 of the pouch 120. In addition, it can be seen that the closing portions 266 and 278 may each be sufficiently longer than the width of the binding member 190.

Meanwhile, the electrode assembly 150 or 250 according to the present invention may be used not only for general lithium secondary batteries, but also for lithium secondary batteries having variously shaped cells. In this case, "variously shaped cell" means batteries having various shapes or shapes that are not determined.

According to the electrode assembly and the lithium secondary battery including the same according to the present invention, the closing portion having a straight shape and a length equal to or longer than a width of the binding member for fixing the stacked state of the electrode assembly is formed at the edges of the pocketing positive electrode and the negative electrode. Therefore, it is possible to prevent interference between the binding member and the pouch sealing portion, inhibit a breakdown of insulation resistance of the sealing portion, and thus prevent a deterioration in safety of the lithium secondary battery.

While the embodiments of the present invention have been described above with reference to particular contents such as specific constituent elements, the limited embodiments, and the drawings, but the embodiments are provided merely for the purpose of helping understand the present invention overall, and the present invention is not limited to the embodiment, and may be variously modified and altered from the disclosure by those skilled in the art to which the present invention pertains. Accordingly, the spirit of the present invention should not be limited to the described embodiment, and all of the equivalents or equivalent modifications of the claims as well as the appended claims belong to the scope of the spirit of the present invention.

## Claims

1. An electrode assembly comprising:
a pocketing positive electrode comprising a positive electrode current collector, positive electrode active materials applied onto two opposite surfaces of the positive electrode current collector, an insulating member configured to surround an edge of the positive electrode current collector except for a positive electrode uncoated portion protruding the edge of the positive electrode current collector, and separators positioned on upper and lower surfaces of the insulating member so as to cover the positive electrode active materials and the insulating member;
a negative electrode comprising a negative electrode current collector and a negative electrode active material applied onto at least one of two opposite surfaces of the negative electrode current collector, the negative electrode being stacked alternately with the pocketing positive electrode; and
a binding member attached to the pocketing positive electrode and the negative electrode to maintain a stacked state or an aligned state of the pocketing positive electrode and the negative electrode alternately stacked,
wherein closing portions are formed at edges of the pocketing positive electrode and the negative electrode and each have a length which is not shorter than a width of the binding member, and the binding member is positioned on the closing portions.

2. The electrode assembly of claim 1, wherein the edges of the pocketing positive electrode and the negative electrode, except for the closing portion, are curved, and the closing portion is not curved.

3. The electrode assembly of claim 2, wherein the closing portion comprises a linear portion formed straight or linearly, and a length of the linear portion is equal to or longer than the width of the binding member.

4. The electrode assembly of claim 3, wherein in a state in which the pocketing positive electrode and the negative electrode are alternately stacked, the closing portion formed at the edge of the pocketing positive electrode and the closing portion formed at the edge of the negative electrode are formed at positions that coincide with or overlap each other.

5. The electrode assembly of claim 3, wherein the closing portion formed at the edge of the negative electrode is formed on the negative electrode current collector and the negative electrode active material.

6. The electrode assembly of claim 5, wherein the closing portion formed at the edge of the pocketing positive electrode is formed on the separator and the insulating member.

7. The electrode assembly of claim 6, wherein the closing portion formed at the edge of the pocketing positive electrode is formed to be in line contact with the edge of the positive electrode current collector.

8. The electrode assembly of claim 6, wherein in a state in which the pocketing positive electrode and the negative electrode are alternately stacked, the edge of the positive electrode current collector is positioned inward from the edge of the negative electrode current collector.

9. The electrode assembly of claim 5, wherein the closing portion formed at the edge of the pocketing positive electrode is formed on the positive electrode current collector, the positive electrode active material, the separator, and the insulating member.

10. The electrode assembly of claim 9, wherein in a state in which the pocketing positive electrode and the negative electrode are alternately stacked, at least a part of the edge of the positive electrode current collector is positioned inward from the edge of the negative electrode current collector.

11. A lithium secondary battery comprising:
the electrode assembly according to claim 1; and
a casing configured to seal and accommodate an electrolyte together with the electrode assembly.

12. The lithium secondary battery of claim 11, wherein the casing comprises a first pouch and a second pouch, a sealing portion is formed by joining edges of the first and second pouches, and an insulation maintaining portion is formed between the closing portion, the binding member, and an inner edge of the sealing portion.

13. The lithium secondary battery of claim 12, wherein the insulation maintaining portion is a portion surrounded by the closing portion, the binding member, and the inner edge of the sealing portion, and the binding member is positioned in the insulation maintaining portion but not in contact with the sealing portion.
